# EUROPEAN PATENT APPLICATION

(11) **EP 4 467 385 A1**
(43) Date of publication of application: **27.11.2024**
(21) Application number: 24174718.7
(22) Date of filing: 08.05.2024
(51) Int. Cl.: B60L 15/20, H02K 1/16, H02K 1/18, H02K 3/12, H02K 11/33, H02P 25/20

(54) **VEHICLE DRIVE SYSTEM**

(30) Priority: 15.05.2023 JP 2023080422
(71) Applicant: MAZDA MOTOR CORPORATION, Hiroshima 730-8670 (JP)
(72) Inventor: Yonemori, Kei, Aki-gun, Hiroshima, 730-8670 (JP)
(74) Representative: Thoma, Michael

(57) **Abstract**

[Task] To provide a vehicle drive system capable of inducing a driving feeling, which is similar to the driving feeling obtained by driving a vehicle having a transmission, even with a vehicle not equipped with the transmission.

[Solution] The vehicle drive system includes: a motor having a cylindrical stator and a cylindrical rotor provided in the stator and driving a drive wheel of a vehicle by rotation of the rotor; and a motor ECU controlling the motor. The stator has plural primary conductors, and the rotor has plural secondary conductors in a radially outer portion. The motor is configured to change a number of poles of the stator when the motor ECU increases/reduces a number of primary conductor groups through which the current flows in the same direction and are continuously aligned in a circumferential direction. An ECU and the motor ECU are configured to change the number of the poles of the stator (S7, S10) on the basis of at least one of a driving operation by a driver and a travel state of an own vehicle (S1).

## Description

### [Technical Field]

The present invention relates to a vehicle drive system and, in particular to, a vehicle drive system that is applied to a vehicle traveling using a motor as a drive source.

### [Background Art]

Conventionally, an electric vehicle that does not have an internal combustion engine (an engine) and travels using an electric motor (a motor) as a drive source have been known. While the engine hardly generates torque from zero to a certain engine speed, the motor can generate maximum torque from zero rotation speed. Thus, such an electric vehicle is often not equipped with a transmission (except for reduction gears) that is essential for the engine vehicle.

Just as described, since the electric vehicle significantly differs from the engine vehicle not only in terms of the drive source but also in that the electric vehicle is not equipped with the transmission, there is a concern that the electric vehicle may give a sense of discomfort to a user who is accustomed to the engine vehicle.

Accordingly, in regard to the electric vehicle not equipped with the transmission, it is considered to change a characteristic of the motor as the drive source in such a situation where gear shifting by the transmission occurs in the engine vehicle. Various methods for changing the characteristic of the motor are available, and one thereof is a rotary electric machine controller disclosed in Patent document 1, for example. The rotary electric machine controller controls a current phase of a winding pair to convert the number of poles of a rotary electric machine (motor).

### [Prior Art Documents]

### [Patent documents]

[Patent document 1] JPH07-322413A

### [Summary of the Invention]

### [Problem to be solved by the invention]

By the way, favorable acceleration performance of the electric vehicle is often achieved by controlling the motor rotation speed and a vehicle speed proportionally, for example, in such a manner that, when an accelerator pedal is depressed, the motor rotation speed is increased, and the vehicle speed is increased accordingly. However, such control causes the user who is accustomed to the engine vehicle to obtain a feeling of riding a go-cart, and this is thus one of the reasons why the user feels the sense of discomfort.

In view of the above, it is considered to apply the rotary electric machine controller in Patent document 1 to the electric vehicle. However, the rotary electric machine controller in Patent document 1 only changes the number of the poles in the control for shifting the current phase when it is determined that the motor rotation speed exceeds a predetermined value. Thus, the rotary electric machine controller in Patent document 1 does not change the motor characteristic in such a situation that gear shifting occurs in the vehicle.

Thus, even when the rotary electric machine controller in Patent document 1 is simply applied to the electric vehicle, it is impossible to completely solve the problem of giving a different driving feeling (the sense of discomfort) to a driver who is accustomed to the engine vehicle.

The invention has been made in view of such a point and therefore has a purpose of providing a vehicle drive system capable of inducing a driving feeling, which is obtained by driving a vehicle having a transmission, even with a vehicle not equipped with the transmission.

### [Means for solving the Problem]

In order to achieve the above purpose, in a vehicle drive system according to the invention, a characteristic of a motor is changed on the basis of at least one of a driving operation by a driver and a travel state of an own vehicle.

More specifically, the invention provides the vehicle drive system including: the motor that has a cylindrical stator and a cylindrical rotor which may be provided in the stator to be coaxially rotatable with a center axis of the stator and that drives a drive wheel of the vehicle by rotation of the rotor; and a control section that controls the motor.

In this vehicle drive system, the stator has plural primary conductors that extend in an axial direction and are aligned in a circumferential direction, the rotor has plural secondary conductors in a radially outer portion, the plural secondary conductors extending in the axial direction and being aligned in the circumferential direction. The motor is configured to change a number of poles of the stator when the control section changes a direction of a current flowing through each of the plural primary conductors and increases/reduces a number of primary conductor groups in each of which the current flows in the same direction and the primary conductors are continuously aligned in the circumferential direction. The control section is configured to change the number of the poles of the stator on the basis of at least one of the driving operation by the driver and the travel state of the own vehicle.

A motor rotation speed of the motor is inversely proportional to the number of the poles of the stator while motor torque is proportional to the number of the poles of the stator. However, with this configuration, when the control section changes the number of the poles of the stator, characteristics of the motor (the motor rotation speed and the motor torque) can be changed before and after the change. For example, when the number of the poles of the stator is relatively increased, the motor torque is relatively increased (the motor rotation speed is reduced), and thus a similar feeling to that obtained at a low-speed stage can be induced. Meanwhile, when the number of the poles of the stator is relatively reduced, the motor rotation speed is relatively increased (the motor torque is reduced), and thus a similar feeling to that obtained at a high-speed stage can be induced.

In this way, the control section changes the number of the poles of the stator (changes the characteristics of the motor) on the basis of at least one of the driving operation by the driver and the travel state of the own vehicle, in other words, the driver's preference. Thus, even with an electric vehicle or the like that is not equipped with a transmission, it is possible to induce a driving feeling obtained by driving a vehicle having the transmission.

Furthermore, unlike a case where the motor rotation speed is continuously changed by changing a frequency, the motor rotation speed can be changed stepwise by changing the number of the poles of the stator. Thus, there is also an advantage of inducing a unique gear shift feeling.

In the vehicle drive system, the driving operation by the driver may include an accelerator operation, and the control section may be configured to increase the number of the poles of the stator when required drive power, which is estimated on the basis of the accelerator operation, is large in comparison with a case where the required drive power is small.

With this configuration, when the required drive power is large as in a case where an accelerator pedal is depressed heavily to overtake a vehicle during high-speed travel, for example, the control section increases the number of the poles of the stator. As a result, it is possible to increase the motor torque (acceleration) and thereby induce an acceleration feeling in response to the driver's preference.

Furthermore, in the vehicle drive system, the driving operation by the driver may include a brake operation, and the control section may be configured to increase the number of the poles of the stator when a required braking force, which is estimated on the basis of the brake operation, is large in comparison with a case where the required braking force is small.

By the way, a flip side of a fact that a large supply of the current increases the motor torque is that, when the motor, in which the rotor is driven by the drive wheel, can generate the large motor torque, it is possible to generate a large regenerative braking force by drawing electric power from such a motor.

With this configuration, when the required braking force is large as in a case where a brake pedal is depressed during the high-speed travel, for example, the control section increases the number of the poles of the stator. As a result, it is possible to generate the large regenerative braking force and thereby induce a deceleration feeling in response to the driver's preference.

In the vehicle drive system, the travel state of the own vehicle may include surrounding travel environment of the own vehicle, and the control section may be configured to increase the number of the poles of the stator during travel on an uphill road or during travel on a downhill road to be larger than that during travel on a flat road.

The travel on the uphill road requires an increase in a tire force to press the ground (= drive power). However, with this configuration, the number of the poles of the stator is increased during the travel on the uphill road to be larger than that during the travel on the flat road. Thus, it is possible to increase the motor torque and thereby enable smooth travel on the uphill road.

Meanwhile, for example, in the case where a foot brake (a friction brake) is frequently used on the long downhill road, a brake pad and the like may be worn out, resulting in a fade phenomenon in which braking effectiveness is reduced. However, with this configuration, the number of the poles of the stator is increased during the travel on the downhill road to be larger than that during the travel on the flat road. Thus, it is possible to increase the regenerative braking force and thereby suppress occurrence of the fade phenomenon by reducing the number of times the foot brake is used.

### [Advantage of the invention]

As it has been described so far, the vehicle drive system according to the invention can induce the driving feeling, which is obtained by driving the vehicle having the transmission, even with the vehicle not equipped with the transmission.

### [Brief Description of the Drawings]

[Fig. 1] Fig. 1 is a plan view schematically illustrating a vehicle on which a vehicle drive system according to an embodiment of the invention is mounted.
[Fig. 2] Fig. 2 is a block diagram illustrating the vehicle drive system.
[Fig. 3] Fig. 3 includes views, each of which schematically illustrates a configuration of a battery.
[Fig. 4] Fig. 4 is a cross-sectional view schematically illustrating a motor.
[Fig. 5] Fig. 5 is a perspective view schematically illustrating a secondary conductor.
[Fig. 6] Fig. 6 is a perspective view schematically illustrating a primary conductor and an inverter.
[Fig. 7] Fig. 7 is a front view schematically illustrating the inverter.
[Fig. 8] Fig. 8 is a conceptual view schematically illustrating a six-pole stator.
[Fig. 9] Fig. 9 is a conceptual view schematically illustrating an eight-pole stator.
[Fig. 10] Fig. 10 includes views, each of which schematically illustrates a principle of rotation of the motor, and in which Fig. 10(a) illustrates the eight-pole motor in a low-speed range, and Fig. 10(b) illustrates a four-pole motor in a high-speed range.
[Fig. 11] Fig. 11 is a flowchart illustrating an example of pole number change control that is executed by a control section.

### [Modes for Carrying Out the Invention]

A description will hereinafter be made on a mode for carrying out the invention with reference to the drawings.

### (Overall Configuration of Electric Vehicle)

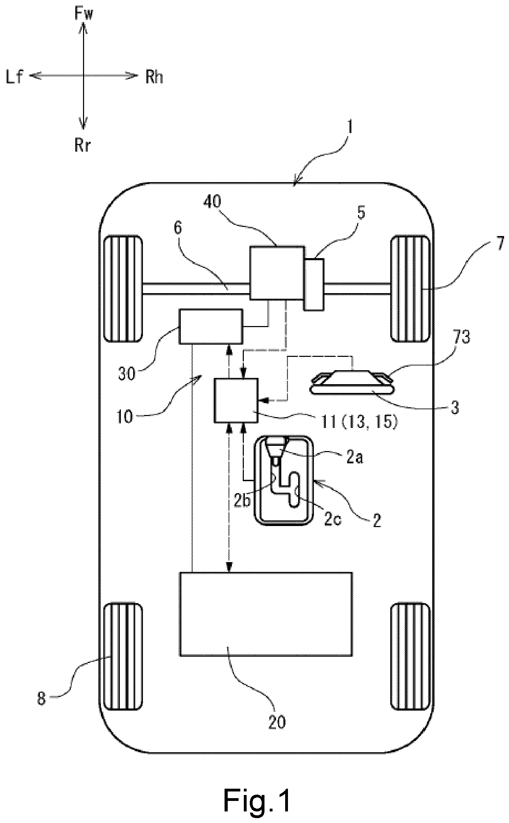

Fig. 1 is a plan view schematically illustrating a vehicle 1 on which a vehicle drive system 10 according to this embodiment is mounted. Fig. 1 indicates a front side Fw in a vehicle front-rear direction, a rear side Rr in the vehicle front-rear direction, a right side Rh in a vehicle width direction, and a left side Lf in the vehicle width direction. As illustrated in Fig. 1, the vehicle 1 includes a battery 20, an inverter 30, a motor 40, and various electronic control units (ECUs) 11, 13, 15 for controlling these components. These battery 20, inverter 30, motor 40, and various ECUs 11, 13, 15 constitute parts of the vehicle drive system 10.

In this vehicle 1, the inverter 30 converts a direct current supplied from the battery 20 to an alternating current and supplies the alternating current to the motor 40, and the motor 40 is thereby rotationally driven. Torque generated by the motor 40, which is rotationally driven just as described, is reduced by a reduction drive 5 and is then output to a driveshaft 6. Consequently, a right and left pair of drive wheels (front wheels 7) is rotationally driven to cause rotation of driven wheels (rear wheels 8). In this way, the vehicle 1 travels. That is, the vehicle 1 is configured as an electric vehicle that travels using the motor 40 as a drive source. Thus, hereinafter, the vehicle 1 will also be referred to as an "electric vehicle 1".

As illustrated in Fig. 1, the electric vehicle 1 also includes a shifter 2 and a paddle switch 73 provided to a steering wheel 3. The ECU 11 receives signals corresponding to operations of these shifter 2 and paddle switch 73. Although this electric vehicle 1 is not equipped with a transmission, which is normally mounted on an engine vehicle, a characteristic of the motor 40 is changed when a driver operates these shifter 2 and paddle switch 73. This enables "driving" reflecting the driver's preference.

### (Vehicle Drive System)

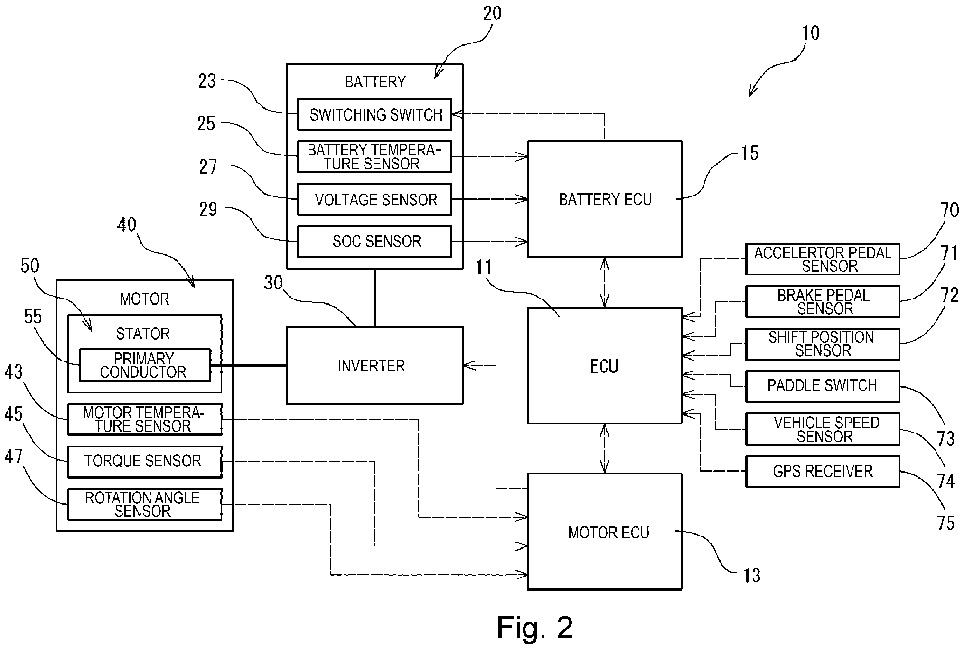

Fig. 2 is a diagram schematically illustrating the vehicle drive system 10. As illustrated in Fig. 2, this vehicle drive system 10 includes the ECU 11, the motor ECU 13, the battery ECU 15, the battery 20, the inverter 30, the motor 40, various sensors (including switches) 70, 71, 72, 73, 74, and a Global Positioning System (GPS) receiver 75. For example, the various sensors 70, 71, 72, 73, 74 detect an accelerator pedal depression amount, a brake pedal depression amount, a vehicle speed V of the electric vehicle 1, and the like.

### -ECU-

The ECU 11 is configured to include a so-called microcomputer having, for example, a central processing unit (CPU), read only memory (ROM) that stores a program executed by the CPU, a map, and the like in advance, random access memory (RAM) in which the CPU temporarily stores data when necessary, backup RAM that holds the data even when power is cut off, an input/output interface, and the like. The CPU executes various types of control by executing signal processing according to the program, which is stored in the ROM in advance, while using a temporary storage function of the R_AM.

In addition, the ECU 11 is connected to the motor ECU 13 and the battery ECU 15 via a controller area network (CAN) communication line (not illustrated), can exchange information with each other as indicated by broken arrows in Fig. 2, and plays a role in integrating the motor ECU 13 and the battery ECU 15.

Furthermore, as illustrated in Fig. 2, the ECU 11 is electrically connected to an accelerator pedal sensor 70, a brake pedal sensor 71, a shift position sensor 72, the paddle switch 73, a vehicle speed sensor 74, and the GPS receiver 75, and detection results and various types of information of these sensors are input/transmitted to the ECU 11.

The accelerator pedal sensor 70 is attached to an accelerator pedal (not illustrated), detects the accelerator pedal depression amount, and outputs a signal representing the detected accelerator pedal depression amount to the ECU 11. Here, the accelerator pedal sensor 70 may be configured to detect an accelerator pedal depression change amount (a change amount per unit time).

The brake pedal sensor 71 is attached to a brake pedal (not illustrated), detects the brake pedal depression amount, and outputs a signal representing the detected brake pedal depression amount to the ECU 11. Here, the brake pedal sensor 71 may be configured to detect a brake pedal depression change amount (a change amount per unit time).

The shift position sensor 72 is provided to each shift position in the shifter 2, detects which of a parking (P) range, a reverse (R) range, a drive (D) range, and a manual (M) range a shift lever 2a is located, and outputs a detection result to the ECU 11. The parking (P) range, the reverse (R) range, and the drive (D) range are arranged in a main gate 2b while the manual (M) range is arranged in a sub gate 2c. Furthermore, the sub gate 2c is a returnable gate with the M range being a reference position. The shift position sensor 72 is configured to output, to the ECU 11, signals in five levels that are D--, D-, D, D+, D++ in response to the number of operations to move the shift lever 2a to the front in the vehicle front-rear direction (a positive operation) or operations to move the shift lever 2a to the rear in the vehicle front-rear direction (a negative operation) performed by the driver.

The paddle switch 73 is a returnable switch that is provided as a right and left pair on a back side (the front side in the vehicle front-rear direction) of the steering wheel 3 and that can repeatedly be pulled toward the driver (the rear side in the vehicle front-rear direction) by the driver. The right and left pair of the paddle switches 73 is configured to output, to the ECU 11, signals in five levels that are D--, D-, D, D+, D++ in response to the number of operations to pull the paddle switch 73 on the right side in the vehicle width direction toward the driver (a positive operation) or operations to pull the paddle switch 73 on the left side in the vehicle width direction toward the driver (a negative operation).

In the ROM of the ECU 11, required torque for the motor 40 is stored and set to be increased in an order of D--, D-, D, D+, D++. Then, as will be described below, the ECU 11 controls the motor 40 by reflecting the driver's intention as expressed by the operation of the shift lever 2a or the paddle switch 73. In the following description, a mode in which such control is executed will also be referred to as a "manual mode".

The vehicle speed sensor 74 is configured to detect the vehicle speed V of the electric vehicle 1 on the basis of a wheel rotational speed of the drive wheels (the front wheels 7) and the like and output a signal representing the detected vehicle speed V to the ECU 11. The ECU 11 is configured to control the motor 40 on the basis of the vehicle speed V detected by the vehicle speed sensor 74, and the like.

The GPS receiver 75 measures a location of the electric vehicle 1 (for example, latitude and longitude of the electric vehicle 1) by receiving radio waves from plural GPS satellites and transmits the location information to the ECU 11. The ECU 11 is configured to acquire (recognize) surrounding travel environment of the electric vehicle 1 on the basis of the location information received from the GPS receiver 75, a map database stored in the ROM, for example, and the like. More specifically, the ECU 11 acquires information such as whether the electric vehicle 1 is presently traveling on a flat road, traveling on an uphill road, traveling on a downhill road, turning, traveling on a winding road, or traveling in an urban area. Here, when the information such as whether the electric vehicle 1 is presently traveling on the uphill road or the downhill road is to be acquired, the method for acquiring the surrounding travel environment is not limited thereto, and a gradient sensor (not illustrated) that detects a road surface gradient may be used.

### -Battery-

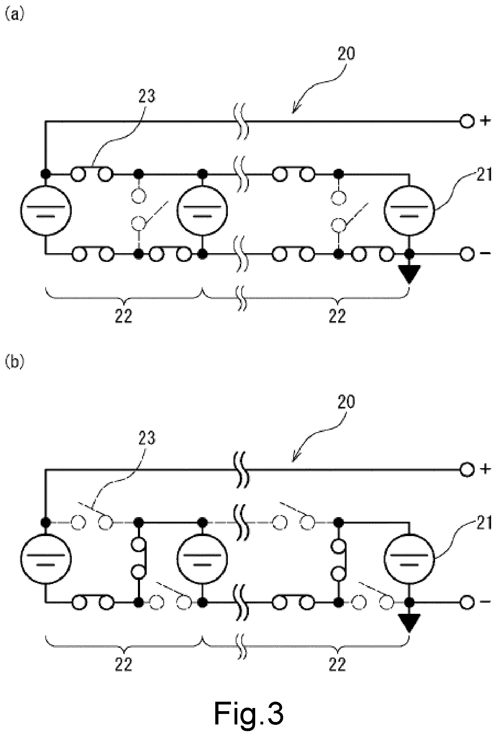

The battery 20 is configured as a battery pack in which plural electrically-connected battery modules 21 (see Fig. 3) are stacked and accommodated in a battery case (not illustrated). Each of the battery modules 21 includes, as a major portion, plural battery cells (not illustrated), each of which includes a lithium-ion secondary battery or a nickel-metal hydride secondary battery. In detail, each of the battery modules 21 is a module formed by electrically connecting the plural battery cells, which are stacked alternately with an insulator (not illustrated) in a manner to hold the insulator therebetween.

As illustrated in Fig. 2, a battery temperature sensor 25, a voltage sensor 27, a state of charge (SOC) sensor 29, and the like are attached to the battery 20. The battery temperature sensor 25 detects a temperature of the battery 20. The voltage sensor 27 detects a voltage of the battery 20. The SOC sensor 29 detects a SOC of the battery 20. These battery temperature sensor 25, voltage sensor 27, and SOC sensor 29 are electrically connected to the battery ECU 15 and configured to output a signal representing the detected temperature, a signal representing the detected voltage, and the SOC to the battery ECU 15, respectively.

### -Battery ECU-

Similar to the ECU 11, the battery ECU 15 is configured to include a so-called microcomputer having, for example, a CPU, ROM, RAM, backup RAM, an input/output interface, and the like. The CPU executes various types of control by executing signal processing according to a program, which is stored in the ROM in advance, while using a temporary storage function of the RAM.

As described above, the battery ECU 15 is connected to the ECU 11 via the CAN communication line and is configured to output, to the ECU 11, signals related to the temperature of the battery 20 received from the battery temperature sensor 25, the voltage of the battery 20 received from the voltage sensor 27 (a DC power supply voltage value) and the SOC of the battery 20 received from the SOC sensor 29. In addition, when the temperature of the battery 20 is excessively low, regenerative charging capability is impaired. Meanwhile, when the temperature of the battery 20 is excessively high, failure possibly occurs. For this reason, the battery ECU 15 is configured to adjust a flow rate of a battery coolant, and the like on the basis of the temperature of the battery 20.

Fig. 3 includes views, each of which schematically illustrates the configuration of the battery 20. In Fig. 3, in order to make the drawing easily viewable, the battery modules 21 and a switching switch 23 are deformed. As illustrated in Fig. 3, the plural battery modules 21 are configured to include a plurality ([number of the battery modules 21 - 1]) of battery module pairs 22 electrically connected to each other via the switching switches 23. Each of the switching switches 23 is configured to be switched between ON/OFF on the basis of a command from the battery ECU 15.

With such a configuration, when the switching switch 23 is switched by the command from the battery ECU 15 as illustrated in Fig. 3(a), all of the plural battery modules 21 (the battery module pairs 22) can be connected in parallel in the battery 20. Just as described, when all of the plural battery modules 21 in the battery 20 are connected in parallel, a supply voltage is relatively reduced, but a supply current can relatively be increased.

Meanwhile, when the switching switch 23 is switched by the command from the battery ECU 15 as illustrated in Fig. 3(b), all of the plural battery modules 21 (the battery module pairs 22) can be connected in series in the battery 20. Just as described, when all of the plural battery modules 21 in the battery 20 are connected in series, the supply current is relatively reduced, but the supply voltage can relatively be increased.

Although not illustrated in the drawing, when the switching switch 23 is switched by the command from the battery ECU 15, a connection mode of some of the battery module pairs 22 can be set in series, and the connection mode of the rest of the battery module pairs 22 can be set in parallel.

The battery ECU 15 and the battery 20 are configured such that the connection mode of the battery module pairs 22 can be switched between in series and in parallel not only when the electric vehicle 1 is stopped or parked but also when the electric vehicle 1 is traveling.

### -Motor and Inverter-

### <Overall Configuration>

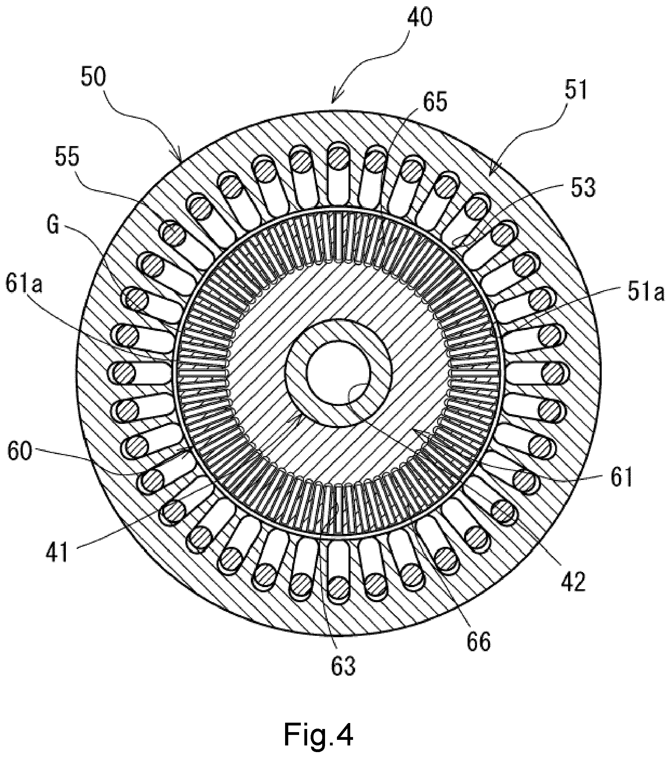

Fig. 4 is a cross-sectional view schematically illustrating the motor 40. In Fig. 4, in order to make the drawing easily viewable, a secondary conductor 65 and a resin 66 are not hatched. In addition, in Fig. 4, in order to make the drawing easily viewable, an air gap G is exaggerated in size. As illustrated in Fig. 4, the motor 40 includes a rotary shaft 41, a rotor 60, and a stator 50. The motor 40 is mounted on the electric vehicle 1 in a manner to set the rotary shaft 41 to be substantially horizontal.

The rotary shaft 41 is supported by a bearing (not illustrated) in a rotatable manner with respect to a casing (not illustrated) of the motor 40. The rotary shaft 41 is formed in a cylindrical shape, and an internal space thereof constitutes a channel 42 through which a refrigerant for cooling each section of the motor 40 flows. A pump (not illustrated) is connected to one end of the channel 42, and the refrigerant is supplied by this pump.

The rotor 60 is formed in a cylindrical shape whose inner diameter is slightly larger than an outer diameter of the rotary shaft 41. The rotor 60 is arranged on a radially outer side of the rotary shaft 41 and is attached to the rotary shaft 41 in an integrally rotatable manner therewith. Meanwhile, the stator 50 is formed in a cylindrical shape and is arranged on a radially outer side of the rotor 60 such that a center axis of the stator 50 matches a center axis of the rotary shaft 41. In other words, the rotor 60 is rotatably arranged in the stator 50 to be coaxial with the center axis of the stator 50. An inner diameter of the stator 50 and an outer diameter of the rotor 60 are set to such dimensions that, when the rotor 60 is arranged in the stator 50, an inner circumferential surface 51a of the stator 50 and an outer circumferential surface 61a of the rotor 60 oppose each other across the air gap G.

In addition, as illustrated in Fig. 2, a motor temperature sensor 43, a torque sensor 45, a rotation angle sensor 47, and the like are attached to the motor 40. The motor temperature sensor 43 detects a temperature of the motor 40, the torque sensor 45 detects motor torque, and the rotation angle sensor 47 detects a rotation angle of the rotor 60. These motor temperature sensor 43, torque sensor 45, and rotation angle sensor 47 are electrically connected to the motor ECU 13 and respectively output, to the motor ECU 13, a signal representing a detected temperature, a signal representing a magnitude of the motor torque, and a signal representing the rotation angle of the rotor 60.

In the thus-configured motor 40, a drive current is supplied to the stator 50 from the battery 20 via the inverter 30 on the basis of a command from the motor ECU 13. Consequently, a rotating magnetic field is formed in the stator 50, which in turn rotationally drives the rotor 60 to drive the front wheels 7 of the electric vehicle 1. In other words, the motor 40 in this embodiment is configured as an induction motor. Hereinafter, the rotor 60, the stator 50, and the inverter 30 will be described in detail.

### <Rotor>

As illustrated in Fig. 4, the rotor 60 has a rotor core 61 and the plural secondary conductors 65 embedded in the rotor core 61.

For example, the rotor core 61 is formed in a cylindrical shape by stacking and integrally coupling plural sheet bodies, each of which is formed in a ring shape by punching out an electromagnetic steel sheet as a magnetic material such as iron. In an outer circumferential section of the rotor core 61, 72 groove strips 63 are formed at equally-spaced intervals in a circumferential direction. Each of the groove strips 63 has a rectangular cross section, extends over an entire axial length of the rotor core 61, and is recessed radially inward from the outer circumferential surface 61a of the rotor core 61. In other words, in the outer circumferential section of the rotor core 61, the 72 groove strips 63, each of which extends in the radial direction, are radiated when seen in the axial direction.

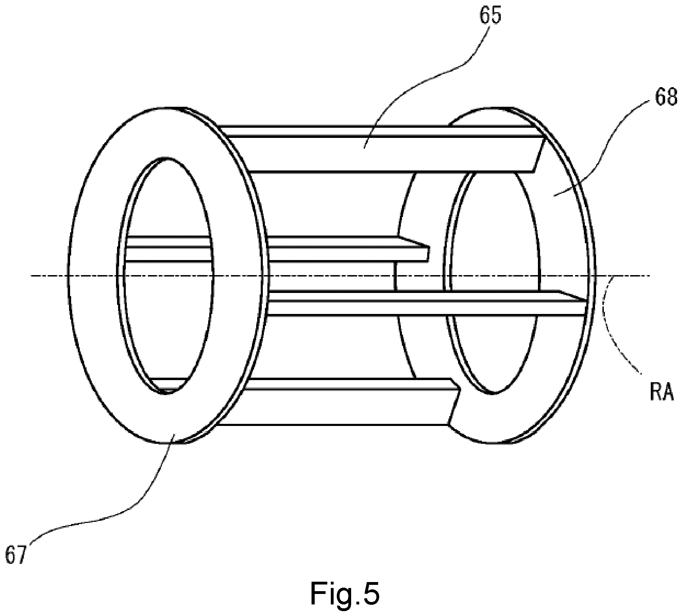

Fig. 5 is a perspective view schematically illustrating the secondary conductor 65. In Fig. 5, in order to make the drawing easily viewable, only 4 of the 72 secondary conductors 65 are illustrated. In addition, Fig. 5 illustrates a rotation axis RA of the motor 40. Each of the secondary conductors 65 is formed of a magnetic material such as copper and, as illustrated in Fig. 4 and Fig. 5, formed in a rectangular shape that extends over the entire axial length of the rotor 60. Since each of the secondary conductors 65 is inserted in the respective groove strip 63 formed in the outer circumferential section of the rotor core 61, the 72 secondary conductors 65 are aligned circumferentially to be radiated when seen in the axial direction. A gap between the groove strip 63 and the secondary conductor 65, which is inserted in the groove strip 63, is filled with the resin 66 supplied by injection molding, thus integrating the rotor core 61 and the secondary conductor 65. Here, Fig. 4 illustrates the 72 groove strips 63 and the 72 secondary conductors 65. However, this illustration is merely one example, and the number of the groove strips 63 and the number of the secondary conductors 65 are not limited thereto.

As illustrated in Fig. 5, the 72 secondary conductors 65 define a cage shape by coupling each of end portions thereof on one side (a left side in Fig. 5) in the axial direction (of a rotation axis RA) to a copper-made first end ring 67 (a shortening ring) by welding or the like and by coupling each of end portions thereof on the other axial side (a right side in Fig. 5) to a copper-made second end ring 68 (a shortening ring) by welding or the like. Just as described, the 72 secondary conductors 65 are electrically connected to each other via the first and second end rings 67, 68 and thereby form a closed circuit. When each of the secondary conductors 65 crosses the magnetic field, an induced electromotive force is generated in each of the secondary conductors 65 due to electromagnetic induction. Meanwhile, since the 72 secondary conductors 65 form the closed circuit, an induced current flows through each of the secondary conductors 65. Here, in order to prevent current leakage at the time when the induced currents in opposite directions from each other flow through the adjacent secondary conductors 65 in the circumferential direction, as much as possible, the outer circumferential surface of each of the secondary conductors 65 is insulated.

### <Stator>

As illustrated in Fig. 4, the stator 50 has a cylindrical stator core 51 and plural primary conductors 55, each of which is provided in the stator core 51 in a manner to penetrate the stator 50 in the axial direction.

The stator core 51 may be formed by stacking and integrally coupling plural electromagnetic steel sheets, each of which is punched into a predetermined shape, for example, or may be formed of a powder magnetic body made by subjecting magnetic powder to compression molding in a mold. The stator core 51 has plural grooves called slots 53. Each of the slots 53 extends radially outward from the inner circumferential surface 51a of the stator core 51, and the adjacent slots 53 separate from each other in a circumferential direction of the stator core 51.

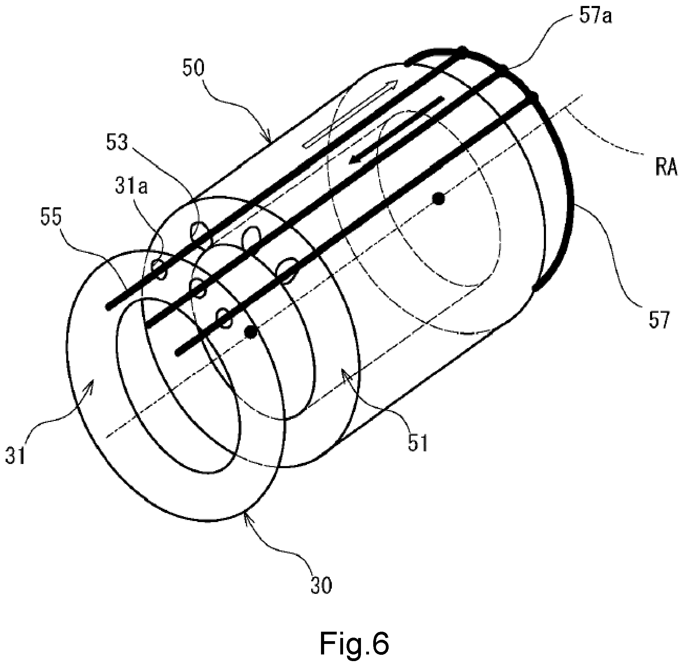

Fig. 6 is a perspective view schematically illustrating the primary conductor 55 and the inverter 30. In Fig. 6, in order to make the drawing easily viewable, only 3 of the 36 primary conductors 55 are illustrated. Each of the primary conductors 55 is formed of the magnetic material such as copper and, as illustrated in Fig. 4 and Fig. 6, formed in a round rod shape that extends over the entire axial length of the rotor 60. Since each of the primary conductors 55 is inserted in the respective slot 53, the 36 primary conductors 55 are aligned circumferentially and intermittently in a circular pattern when seen in the axial direction. Here, Fig. 4 illustrates the 36 slots 53 and the 36 primary conductors 55. However, this illustration is merely one example, and the number of the slots 53 and the number of the primary conductors 55 are not limited thereto.

As illustrated in Fig. 6, in the 36 primary conductors 55, each of which is inserted in the respective slot 53, each of end portions thereof on the other side (a right side in Fig. 6) in the axial direction (of the rotation axis RA) is connected to a copper-made bus ring 57 by welding or the like, and each of connection sections 57a constitutes a neutral point with a potential of 0 (V). Meanwhile, each of end portions on the one axial side (a left side in Fig. 6) of the primary conductors 55 penetrates a respective hole 31a and is projected to the one axial side from a board 31. The holes 31a are formed on the ring-shaped board 31 of the inverter 30 and are aligned circumferentially and intermittently in a circular pattern.

### <Inverter>

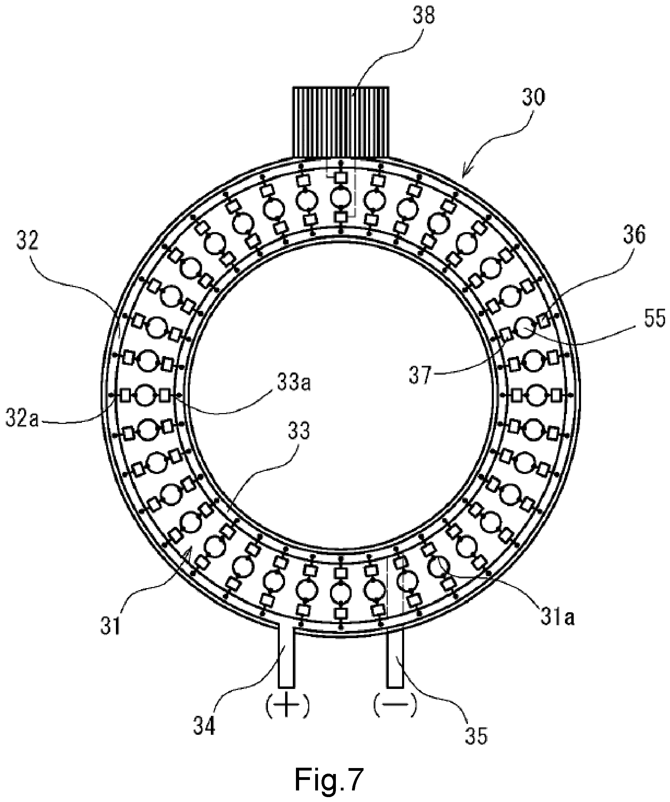

Fig. 7 is a front view schematically illustrating the inverter 30. As illustrated in Fig. 7, the inverter 30 includes, in addition to the board 31, an outer ring section 32, an inner ring section 33, a (+) terminal 34, a (-) terminal 35, an outer arm element 36, an inner arm element 37, and a signal line terminal 38. The inverter 30 is integrated with the motor 40 as illustrated in Fig. 6.

The outer ring section 32 is a ring-shaped member that is made of copper, and is attached to a radially outer portion of a surface on the one axial side of the ring-shaped board 31 in a coaxial manner with the board 31. This outer ring section 32 is integrally formed with the (+) terminal 34 that extends downward, and this (+) terminal 34 is connected to a positive terminal of the battery 20. In this way, the direct current is supplied to the outer ring section 32. This outer ring section 32 is electrically connected to each of the end portions of the 36 primary conductors 55, which are projected to the one axial side from the board 31, via an outer arm 32a that is made of copper and extends radially inward.

The inner ring section 33 is a ring-shaped member that is made of copper and formed to have a smaller diameter than the outer ring section 32, and is attached to a radially inner portion of the surface on the one axial side of the ring-shaped board 31 in the coaxial manner with the board 31. This inner ring section 33 is integrally formed with the (-) terminal 35, and this (-) terminal 35 is connected to a negative terminal of the battery 20. The (-) terminal 35 is connected to the inner ring section 33 on the surface on the one axial side of the board 31, penetrates the board 31 to a back side, and extends downward from a surface on the other axial side thereof. In addition, this inner ring section 33 is electrically connected to each of the end portions of the 36 primary conductors 55 via an inner arm 33a that is made of copper and extends radially outward.

As illustrated in Fig. 7, the outer arm element 36 is provided at an intermediate position of the outer arm 32a, and the inner arm element 37 is provided at an intermediate position of the inner arm 33a. Each of the outer arm element 36 and the inner arm element 37 is configured as a metal-oxide-semiconductor field-effect transistor (Si-MOSFET), for example, and enables high-speed switching. As indicated by broken lines in Fig. 7, the 36 outer arm elements 36 and the 36 inner arm elements 37 are each electrically connected to the signal line terminal 38, and switch ON/OFF of these outer arm elements 36 and inner arm elements 37 are separately controlled by the signal line terminal 38. The switch ON/OFF by the signal line terminal 38 is performed on the basis of a command from the motor ECU 13.

When the outer arm element 36 is switched ON, the current flows from the outer ring section 32 to the primary conductor 55. Meanwhile, when the outer arm element 36 is switched OFF, the outer ring section 32 and the primary conductor 55 are insulated to prevent the current flow from the outer ring section 32 to the primary conductor 55. Similarly, when the inner arm element 37 is switched ON, the current flows from the primary conductor 55 to the inner ring section 33. Meanwhile, when the inner arm element 37 is switched OFF, the primary conductor 55 and the inner ring section 33 are insulated to prevent the current flow from the primary conductor 55 to the inner ring section 33.

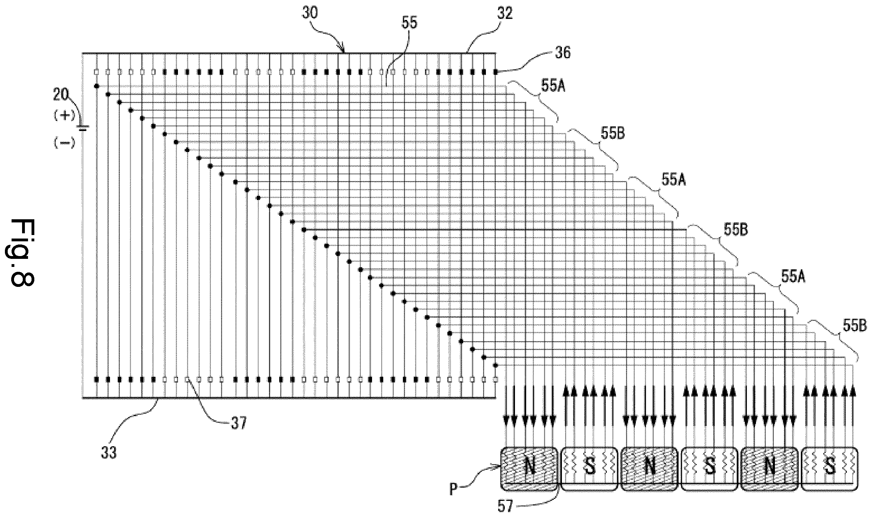

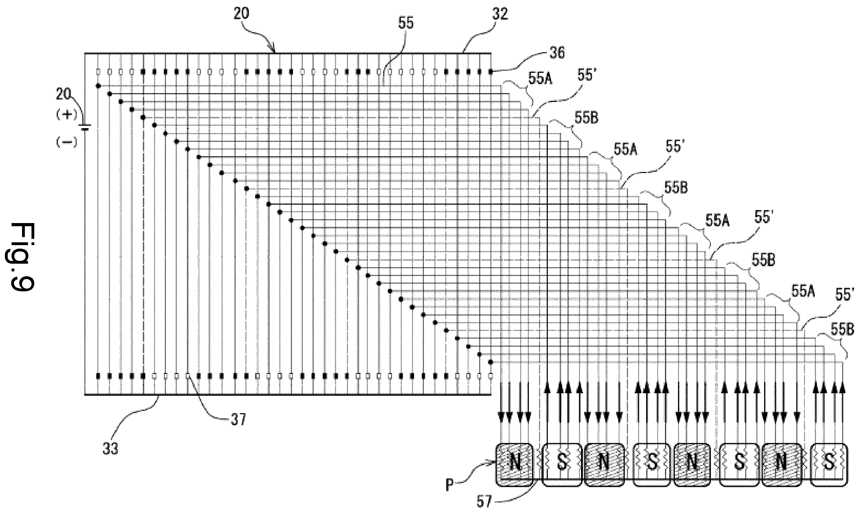

Fig. 8 is a conceptual view schematically illustrating the six-pole stator 50, and Fig. 9 is a conceptual view schematically illustrating the eight-pole stator 50. In Fig. 8 and Fig. 9 , in order to make the drawing easily viewable, the outer ring section 32, the inner ring section 33, and the bus ring 57, each of which as the ring shape, are deformed into straight lines. In addition, in Fig. 8 and Fig. 9, each of the outer arm element 36 and the inner arm element 37 indicated in a blank form represents a switch ON state, and each of the outer arm element 36 and the inner arm element 37 indicated in black represents a switch OFF state.

In an example illustrated in Fig. 8, the motor ECU 13 brings each of the outer arm elements 36 connected to the six primary conductors 55 into the switch ON state and each of the inner arm elements 37 connected thereto into the switch OFF state such that the current flows rightward in Fig. 8 (from the board 31 side toward the bus ring 57 side in reality) and that these six primary conductors 55, which are continuously aligned (circumferentially aligned in reality), constitute a single primary conductor group 55A. In addition, the motor ECU 13 brings each of the outer arm elements 36 connected to the six primary conductors 55 into the switch OFF state and each of the inner arm elements 37 connected thereto into the switch ON state such that the current flows leftward in Fig. 8 (from the bus ring 57 side toward the board 31 side in reality) and that these six primary conductors 55, which are continuously aligned (circumferentially aligned in reality), constitute a single primary conductor group 55B. In this way, six poles P are formed as illustrated in Fig. 8.

Meanwhile, in an example illustrated in Fig. 9, the motor ECU 13 brings each of the outer arm elements 36 connected to the four primary conductors 55 into the switch ON state and each of the inner arm elements 37 connected thereto are into the switch OFF state such that the current flows rightward in Fig. 9 (from the board 31 side toward the bus ring 57 side in reality) and that these four primary conductors 55, which are continuously aligned (circumferentially aligned in reality), constitute the single primary conductor group 55A. In addition, the motor ECU 13 brings each of the outer arm elements 36 connected to the four primary conductors 55 into the switch OFF state and each of the inner arm elements 37 connected thereto into the switch ON state such that the current flows leftward in Fig. 9 (from the bus ring 57 side toward the board 31 side in reality) and that these four primary conductors 55, which are continuously aligned (circumferentially aligned in reality), constitute the single primary conductor group 55B. Furthermore, the motor ECU 13 brings the outer arm element 36 and inner arm element 37, each of which is connected to a primary conductor 55', into the switch OFF state such that the primary conductor 55', through which the current does not flow, is generated at intervals of eight conductors in the primary conductor group 55A and the primary conductor group 55B. In this way, the eight poles P are formed as illustrated in Fig. 9.

Since it is difficult for the driver to recognize vibration of the motor 40 in the electric vehicle 1, such a case is assumed that, when the driver who is accustomed to driving the engine vehicle drives the electric vehicle 1, the driver may feel the sense of discomfort due to a reason that the driver cannot recognize a driving state from the vibration transmitted to a cabin. In this respect, in this embodiment, by intentionally creating the primary conductor 55', through which the current does not flow, the gap is generated between the magnetic fields, and a pitch of the poles P becomes unequal. Thus, pulsation can occur. In this way, the driver can recognize the driving state from the vibration of the motor 40 that is transmitted from the cabin. Thus, also from a perspective of the vibration, it is possible to induce a driving feeling similar to that obtained by driving the engine vehicle.

Just as described, the motor 40 in this embodiment is configured to change the number of the poles of the stator 50 when the motor ECU 13 changes a flow direction of the current through each of the 36 primary conductors 55 via the signal line terminal 38, so as to increase or reduce the number of the primary conductor groups 55A, 55B, in each of which the current flows in the same direction and the primary conductors 55 are continuously aligned in the circumferential direction. Hereinafter, this will also be referred to as "pole number change control".

The six poles and the eight poles are merely examples. Thus, by using the same inverter 30 and stator 50, it is also possible to produce the four poles by forming the primary conductor groups 55A, 55B, each of which includes the nine primary conductors 55, for example. Alternatively, for example, the 16 poles can be produced by forming the primary conductor groups 55A, 55B, each of which includes the 2 primary conductors 55, and generating the primary conductor 55', through which the current does not flow, at intervals of the 8 conductors. Further alternatively, the four poles or the six poles with three phases (a U-phase, a V-phase, and a W-phase) can be produced. In addition, since the inverter 30 in this embodiment has the same function as a normal inverter except that the number of the poles of the stator 50 can be changed, it is naturally possible to charge the battery 20 by converting regenerative power by the motor 40 to the direct current and supplying the direct current to the battery 20.

### -Motor ECU-

Similar to the ECU 11 and the battery ECU 15, the motor ECU 13 is configured to include a so-called microcomputer having, for example, a CPU, ROM, RAM, backup RAM, an input/output interface, and the like. The CPU executes various types of control by executing signal processing according to a program, which is stored in the ROM in advance, while using a temporary storage function of the RAM.

As described above, the motor ECU 13 is connected to the ECU 11 via the CAN communication line and is configured to output, to the ECU 11, signals related to the temperature of the motor 40 received from the motor temperature sensor 43, the motor torque received from the torque sensor 45, and the rotation angle of the rotor 60 received from the rotation angle sensor 47. In this way, as will be described below, the motor ECU 13 is configured to control the motor 40 such that an input current of a predetermined phase, a predetermined advance angle, and a predetermined magnitude flows through the primary conductor 55 on the basis of the rotation angle of the rotor 60 detected by the rotation angle sensor 47, and the like, so as to generate the required torque for the motor 40 received from the ECU 11.

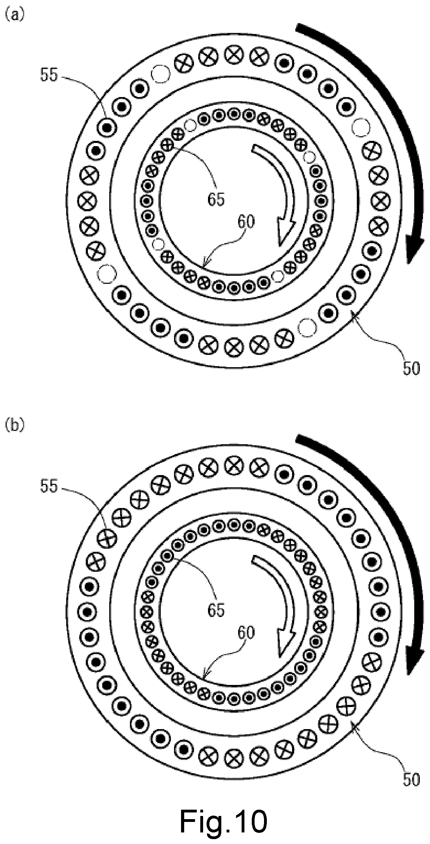

Fig. 10 includes views, each of which schematically illustrates a principle of rotation of the motor 40, and in which Fig. 10(a) illustrates the eighth-pole motor 40 in a low-speed range, and Fig. 10(b) illustrates the four-pole motor 40 in a high-speed range. In Fig. 10, an arrowhead symbol with an X inside a circle indicates that the current flows toward the back of the sheet (for example, from the board 31 side toward the bus ring 57 side), while an arrowhead symbol with a black dot in a circle indicates that the current flows toward the front of the sheet (for example, from the bus ring 57 side toward the board 31 side).

Since the motor rotation speed of the motor 40 is inversely proportional to the number of the poles of the stator 50, as illustrated in Fig. 10(a), in the low-speed range, the motor ECU 13 sets the number of the poles to eight (a relatively large number), for example. Then, the motor ECU 13 supplies the current to the stator 50 (the primary conductor 55) via the signal line terminal 38 while causing high-speed switching of the outer arm element 36 and the inner arm element 37, so as to generate a clockwise rotating magnetic field as indicated by a black arrow in Fig. 10(a). Consequently, the secondary conductor 65 moves relative to the rotating magnetic field, and thus the induced current flows through the secondary conductor 65 due to Fleming's right-hand rule. When the current flows through the secondary conductor 65 in the rotating magnetic field, just as described, an electromagnetic force is generated in the secondary conductor 65 due to Fleming's left-hand rule. In this way, as indicated by a blank arrow in Fig. 10 (a), asynchronous operation is performed in which the rotor 60 embedded with the secondary conductor 65 rotates clockwise at a low speed with a delay from rotation of the rotating magnetic field.

Meanwhile, as illustrated in Fig. 10(b), in the high-speed range, the motor ECU 13 sets the number of the poles to four (a relatively small number), for example. Then, when the motor ECU 13 generates the clockwise rotating magnetic field as indicated by a black arrow in Fig. 10(b), the electromagnetic force is generated in the secondary conductor 65. In this way, as indicated by a blank arrow in Fig. 10(b), the asynchronous operation is performed in which the rotor 60 embedded with the secondary conductor 65 rotates clockwise at a high speed with the delay from the rotation of the rotating magnetic field.

From what have been described so far, in relation to the claims, the ECU 11, the motor ECU 13, and the inverter 30 in this embodiment correspond to the "control section that controls the motor" in the invention. Hereinafter, the ECU 11, the motor ECU 13, and the inverter 30 will also be referred to as the "ECU 11 and the like".

### (Pole Number Change Control)

As described above, the electric vehicle 1 according to this embodiment is not equipped with the transmission, which is normally mounted on the engine vehicle. Accordingly, when the driver who is accustomed to driving the engine vehicle drives the electric vehicle 1, such a case is assumed that the driver obtains the different driving feeling (the sense of discomfort).

For this reason, in the vehicle drive system 10 according to this embodiment, the ECU 11 and the like are configured to change the characteristics of the motor 40 (the motor rotation speed and the motor torque), more specifically, the number of the poles of the stator 50 on the basis of at least one of a driving operation by the driver and a travel state of the electric vehicle 1.

In detail, the ROM of the ECU 11 stores plural control maps (first control maps) in which an allowable operation range (an N-T characteristic) is mapped for each DC power supply voltage value. The allowable operation range (the N-T characteristic) corresponds to each of the variable numbers of the poles, such as the four poles, the six poles, and the eight poles. Then, the ECU 11 is configured to detect the required torque for the motor 40 on the basis of at least one of the driving operation by the driver and the travel state of the electric vehicle 1 and to select the number of the poles that satisfies such required torque by using the first control map.

In order to suppress a shock and an increase in an induced voltage at the time of switching the characteristic of the motor by appropriately considering a change in the voltage of the battery 20, which fluctuates by the SOC, the ECU 11 is configured to supplement the selected first control map with the current DC power supply voltage value of the battery 20 detected by the voltage sensor 27 and to set allowable upper limit torque and allowable lower limit torque.

By configuring the ECU 11 and the like, just as described, for example, when the number of the poles of the stator 50 is relatively increased within the allowable operation range, the motor torque is relatively increased, and a feeling similar to that at a low-speed stage can be induced. Meanwhile, when the number of the poles of the stator 50 is relatively reduced within the allowable operation range, the motor rotation speed is relatively increased, and a feeling similar to that at a high-speed stage can be induced.

Here, the "driving operation by the driver" includes an accelerator operation and a brake operation. The ECU 11 is configured to detect the required torque for the motor 40 by using a control map (a second control map) stored in the ROM in advance and to change the number of the poles of the stator 50 on the basis of such required torque. In the control map (the second control map), the required torque for the motor 40, which is defined by the accelerator pedal depression amount (and the brake pedal depression amount) and the vehicle speed V, is mapped.

More specifically, in the case where required drive power (required torque), which is estimated on the basis of the vehicle speed V detected by the vehicle speed sensor 74 and the accelerator pedal depression amount (the accelerator operation) detected by the accelerator pedal sensor 70, is large, the ECU 11 is configured to use the second control map and increase the number of the poles of the stator 50 to be larger than that when the required drive power is small. When the required drive power is large as in a case where the accelerator pedal is depressed heavily to overtake a vehicle during high-speed travel, for example, the ECU 11 and the like increase the number of the poles of the stator 50. As a result, it is possible to increase the motor torque (the acceleration) and thereby induce an acceleration feeling in response to the driver's preference.

Meanwhile, in the case where a required braking force, which is estimated on the basis of the vehicle speed V and the brake pedal depression amount (the brake operation) detected by the brake pedal sensor 71, is large, the ECU 11 is configured to increase the number of the poles of the stator 50 to be larger than that when the required braking force is small. When the required braking force is large as in a case where the brake pedal is depressed during the high-speed travel, the ECU 11 and the like increase the number of the poles of the stator 50. As a result, it is possible to generate a large regenerative braking force and thereby induce a deceleration feeling in response to the driver's preference.

The "travel state of the own vehicle" includes the surrounding travel environment of the electric vehicle 1. As described above, the ECU 11 acquires the surrounding travel environment of the electric vehicle 1 (the flat road, the uphill road, the downhill road, turning, the winding road, or the urban area) on the basis of the location information received from the GPS receiver 75 and the map database stored in the ROM. The ECU 11 is configured to detect the required torque for the motor 40 by using a control map (a third control map) stored in the ROM in advance and to change the number of the poles of the stator 50 on the basis of such required torque. In the control map (the third control map), the required torque for the motor 40, which is defined by the vehicle speed V and the surrounding travel environment, is mapped. More specifically, the ECU 11 is configured to increase the number of the poles of the stator 50 when the electric vehicle 1 is traveling on the uphill road or the downhill road in comparison with a case where the electric vehicle 1 is traveling on the flat road.

Just as described, when the electric vehicle 1 is traveling on the uphill road, the number of the poles of the stator 50 is increased to be larger than that when the electric vehicle 1 is traveling on the flat road. Thus, it is possible to increase the motor torque and thereby enable smooth travel of the electric vehicle 1 on the uphill road. Meanwhile, when the electric vehicle 1 is traveling on the downhill road, the number of the poles of the stator 50 is increased to be larger than that when the electric vehicle 1 is traveling on the flat road. Thus, it is possible to increase the regenerative braking force and thereby suppress occurrence of a fade phenomenon caused by frequent use of a foot brake (friction brake).

However, such a case is assumed that, in the case where the driver selects the "manual mode", but the ECU 11 changes the number of the poles of the stator 50 (the characteristic of the motor) on the basis of the accelerator operation, the brake operation, and the surrounding travel environment of the electric vehicle 1, the driver feels the sense of discomfort. Accordingly, in this embodiment, in the case where the driver selects the "manual mode", in order to execute the pole number change control, to which the driver's intention expressed by the operation of the shift lever 2a or the paddle switch 73 is reflected, the ECU 11 sets the required torque to be increased in the order of D--, D-, D, D+, D++, and changes the number of the poles by using the first control map, so as to generate such required torque.

As it has been described so far, in the vehicle drive system 10 according to this embodiment, the ECU 11 and the like change the number of the poles of the stator 50 on the basis of at least one of the driving operation by the driver and the travel state of the electric vehicle 1, in other words, according to the driver's preference, and thereby change the characteristics of the motor 40 (the motor rotation speed and the motor torque) before and after the change. Thus, even with the electric vehicle 1 that is not equipped with the transmission, it is possible to induce the driving feeling similar to that obtained by gear shift control in the engine vehicle.

Furthermore, unlike a case where the motor rotation speed is continuously changed by changing the frequency, the motor rotation speed can be changed stepwise by changing the number of the poles of the stator 50. Thus, there is also an advantage of inducing a unique gear shift feeling.

### (Control Flow)

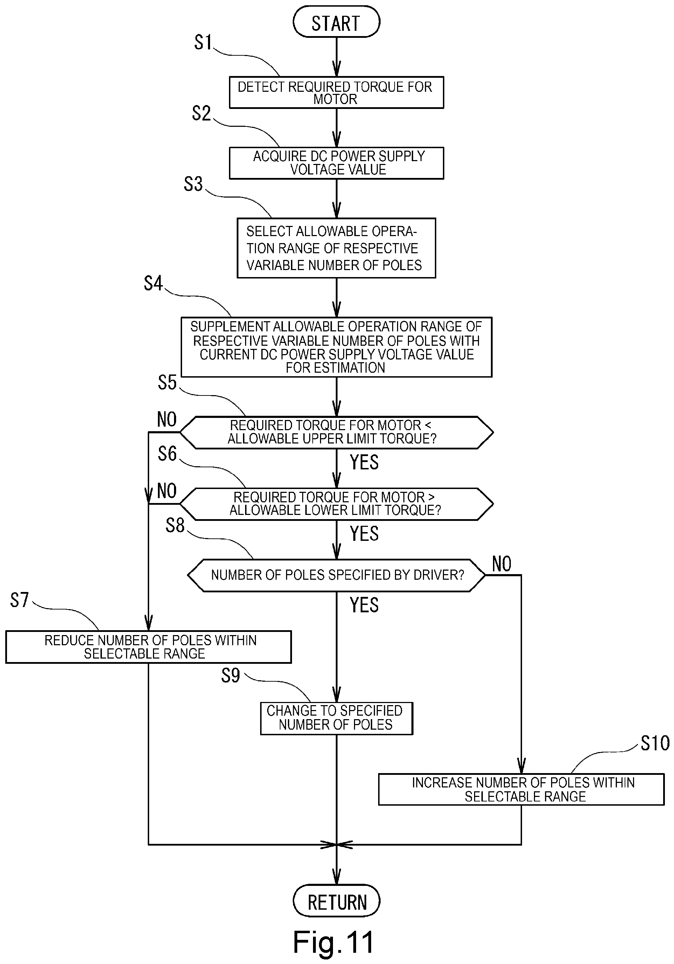

Next, a description will be made on an example of the pole number change control, which is executed by the ECU 11 and the like, with reference to a flowchart illustrated in Fig. 11.

First, in step S1, the ECU 11 detects the required torque for the motor 40. More specifically, the ECU 11 uses the second or third control map stored in the ROM to detect the required torque on the basis of the accelerator pedal depression amount or the brake pedal depression amount, the vehicle speed V, the surrounding travel environment, and the like. Then, the processing proceeds to step S2.

In next step S2, the ECU 11 acquires the DC power supply voltage value of the battery 20. Then, the processing proceeds to step S3.

In next step S3, the ECU 11 selects the first control map, which is stored in the ROM and in which the allowable operation range corresponding to the respective variable number of the poles is mapped for each DC power supply voltage value. Then, the processing proceeds to step S4.

In next step S4, the ECU 11 supplements the allowable operation range (first control map) selected in step S3 with the DC power supply voltage value acquired in step S2 for estimation, and thereafter sets the allowable upper limit torque and the allowable lower limit torque. Then, the processing proceeds to step S5.

In next step S5, the ECU 11 determines whether the required torque, which is acquired in step S1, is lower than the allowable upper limit torque. If it is determined NO in this step S5, the processing proceeds to step S7. On the other hand, if it is determined YES in this step S5, the processing proceeds to step S6. In next step S6, the ECU 11 determines whether the required torque exceeds the allowable lower limit torque. If it is determined NO in this step S6, the processing proceeds to step S7. On the other hand, if it is determined YES in this step S6, the processing proceeds to step S8. That is, if the required torque is lower than the allowable upper limit torque and exceeds the allowable lower limit torque, the processing proceeds to step S8. Otherwise, the processing proceeds to step S7.

In step S7, in order to expand an operable range by increasing the motor rotation speed, the ECU 11 and the like reduce the number of the poles of the stator 50 within a selectable range. Then, the processing returns.

In step S8, the ECU 11 determines whether the driver has specified the number of the poles, in other words, whether the "manual mode" has been selected. If it is determined YES in this step S8, the processing proceeds to step S9. Thereafter, the ECU 11 and the like change the number of the poles of the stator 50 to the number of the poles of the stator 50, which is specified by the driver with the operation of the shift lever 2a or the paddle switch 73, within the selectable range. Then, the processing returns.

On the other hand, if it is determined NO in step S8, in other words, if the driver has not specified the number of the poles, the processing proceeds to step S10. Thereafter, the ECU 11 and the like increase the number of the poles within the selectable range. Then, the processing returns.

### (Other Embodiments)

The invention is not limited to the embodiment and can be carried out in various modes without departing from the spirit and main features thereof.

In the above embodiment, the asynchronous operation is performed in which the rotor 60 is rotated by using the induced current generated in the secondary conductor 65. However, the invention is not limited thereto. For example, synchronous operation may be performed. In the synchronous operation, plural permanent magnets (not illustrated) are aligned in the circumferential direction in a portion of the rotor 60 on the radially inner side of the secondary conductor 65, and the rotor 60 is rotated by using magnetic forces of the permanent magnets.

In the above embodiment, the motor 40 is arranged in the front portion of the electric vehicle 1 in the vehicle front-rear direction, and the front wheels 7 are the drive wheels. However, the invention is not limited thereto. For example, the motor 40 may be arranged in a rear portion of the electric vehicle 1 in the vehicle front-rear direction, and the rear wheels 8 may be the drive wheels.

As described above, the above-described embodiment is merely illustrative in all respect and thus should not be construed in a restrictive manner. Furthermore, modifications and changes that fall within equivalents of the claims fall within the scope of the invention.

### [Industrial Applicability]

Since it is possible to induce the driving feeling, which is obtained by driving the vehicle having the transmission, the invention is extremely beneficial when being applied to the vehicle drive system in the electric vehicle or the like not equipped with the transmission.

### [Description of Reference Signs and Numerals]

1: VEHICLE
7: FRONT WHEEL (DRIVE WHEEL)
10: VEHICLE DRIVE SYSTEM
11: ECU (CONTROL SECTION)
13: MOTOR ECU (CONTROL SECTION)
30: INVERTER (CONTROL SECTION)
40: MOTOR
50: STATOR
55: PRIMARY CONDUCTOR
55A: PRIMARY CONDUCTOR GROUP
55B: PRIMARY CONDUCTOR GROUP
60: ROTOR
65: SECONDARY CONDUCTOR
P: POLE

## Claims

1. A vehicle drive system comprising:
a motor (40) that has a cylindrical stator (50) and a cylindrical rotor (60) rotatable about a center axis of the stator (50) and that drives a drive wheel of a vehicle (1) by rotation of the rotor (60); and
a control section (13) that controls the motor (40), wherein
the stator (50) has plural primary conductors (55) that extend in an axial direction and are aligned in a circumferential direction,
the rotor (60) has plural secondary conductors (65) extending in the axial direction and being aligned in the circumferential direction, wherein
the motor (40) is configured to change a number of poles (P) of the stator (50) when the control section (13) changes a direction of a current flowing through each of the plural primary conductors (55) and increases/reduces a number of primary conductor groups in each of which the current flows in the same direction and the primary conductors (55) are continuously aligned in the circumferential direction, and
the control section (13) is configured to change the number of the poles (P) of the stator (50) on the basis of at least one of a driving operation by a driver and a travel state of the vehicle (1).

2. The vehicle drive system according to claim 1, wherein
the driving operation by the driver includes an accelerator operation, and
the control section (13) is configured to increase the number of the poles (P) of the stator (50) when required drive power, which is estimated on the basis of the accelerator operation, is large in comparison with a case where the required drive power is small.

3. The vehicle drive system according to anyone of the preceding claims, wherein
the driving operation by the driver includes a brake operation, and
the control section (13) is configured to increase the number of the poles (P) of the stator (50) when a required braking force, which is estimated on the basis of the brake operation, is large in comparison with a case where the required braking force is small.

4. The vehicle drive system according to anyone of the preceding claims, wherein
the travel state of the vehicle (1) includes surrounding travel environment of the vehicle (1), and
the control section (13) is configured to increase the number of the poles (P) of the stator (50) during travel on an uphill road or during travel on a downhill road to be larger than that during travel on a flat road.

5. The vehicle drive system according to anyone of the preceding claims, wherein said rotor (60) is provided in the stator (50), wherein the plural secondary conductors (65) are provided in a radially outer portion of said rotor (60).

6. The vehicle drive system according to anyone of the preceding claims, wherein the motor (40) is connected to a battery (20) via an inverter (30) for supplying a drive current to the stator (50) on the basis of a command from the control section.

7. The vehicle drive system according to the preceding claim, wherein said inverter (30) includes outer and inner ring sections (32, 33) connected to plus and minus terminals (34, 35), wherein said outer and inner ring sections (32, 33) are electrically connected to said plural primary conductors (55) via outer and inner arm elements (36, 37) which include switching sections, preferably in terms of transistors forming high speed switches, configured to be switched on/off on the basis of a command from said control section (13) to change the number of poles (P) of the stator (50).

8. Vehicle such as an automobile, comprising a vehicle drive system as defined by anyone of the preceding claims.
